Europäisches Patentamt

European Patent Office

Office européen des brevets

(19)

(11) Veröffentlichungsnummer : **0 097 310**
**B1**

# (12) EUROPÄISCHE PATENTSCHRIFT

(45) Veröffentlichungstag der Patentschrift :
10.09.86

(21) Anmeldenummer : **83105811.0**

(22) Anmeldetag : **14.06.83**

(51) Int. Cl.⁴ : **B 01 D 46/30**

---

(54) **Verfahren und Einrichtung zur regenerierenden Reinigung eines granulatförmigen Filterbettes.**

---

(30) Priorität : **22.06.82 CH 3827/82**
**30.07.82 CH 4630/82**

(43) Veröffentlichungstag der Anmeldung :
**04.01.84 Patentblatt 84/01**

(45) Bekanntmachung des Hinweises auf die Patenterteilung : **10.09.86 Patentblatt 86/37**

(84) Benannte Vertragsstaaten :
**AT BE CH DE FR GB IT LI LU NL SE**

(56) Entgegenhaltungen :
**FR-A- 2 322 649**
**FR-A- 2 350 128**
**FR-A- 2 444 490**

(73) Patentinhaber : **Berz, W.M.**
**Au Réduit 712**
**CH-7500 St. Moritz (CH)**

(72) Erfinder : **Der Erfinder hat auf seine Nennung verzichtet**

(74) Vertreter : **Braun, André et al**
**A. Braun, Braun, Héritier, Eschmann AG Patentanwälte Holbeinstrasse 36-38**
**CH-4051 Basel (CH)**

## Beschreibung

Die Erfindung bezieht sich auf ein Verfahren zur regenerierenden Reinigung eines Filtermediums nach dem Oberbegriff des Patentanspruchs 1 — wie es z. B. aus der FR-A-2 350 128 bekannt ist — sowie auf eine Vorrichtung zur Durchführung dieses Verfahrens.

Es sind Filteranlagen bekannt, in welchen granulatförmiges Filtermaterial durch einen Fördergasstrom in einem zentral angeordneten Förderrohr mindestens zeitweise nach oben bewegt wird, anschliessend in den Wirkungsbereich des Fördergasstromes fällt und somit im Kreislauf zwischen den gasdurchlässigen Wänden hindurchgefördert wird. Die Förderung des granulatförmigen Filtermediums erfolgt in diesem Falle durch Druckluft, welche von unten an das konisch zusammenlaufende Filterbett angelegt wird und das Filtermedium nach oben durch das Förderrohr mitreisst. Als Nachteil der bekannten Anordnung hat sich erwiesen, dass das Nachrutschen des innerhalb des Filterbettes nach unten fallenden Filtermediums schwer beherrschbar ist, so dass sich an der unteren Förderrohrmündung unsymmetrische Eintrittsverhältnisse ergeben und eine kontinuierliche Förderung des Mediums durch das Förderrohr nur schwer gewährleistet werden kann. Auch hat sich gezeigt, dass der Siebeinsatz, welcher den Druckluftkanal vom darüber befindlichen Filtermedium trennt, durch zusammenbackenden Staub und Verunreinigungen der Förderluft relativ rasch verstopft wird, was ebenfalls zu Betriebsstörungen führt. Auch wird die bekannte Anlage durch Wanddurchtritte und Druckluftleitungsführung relativ kompliziert.

Ein weiterer Nachteil dieser bekannten Anlagen ist ferner darin zu sehen, dass dieselben in ihrem Betriebsverhalten auf die unvermeidlichen Schwankungen des Druckes bzw. der Fördermenge in der Rohgaszuleitung nicht ansprechen. Steigt der Druck in der Rohgaszuleitung beispielsweise an, so wirkt dieser Druckanstieg dem Fördergasstrom entgegen und es besteht die Gefahr, dass nicht nur das Transportvolumen absinkt, sondern das Granulat innerhalb des Förderrohres kollabiert und demgemäss das gesamte Transportsystem zusammenbricht.

In der FR-A-2 444 490 ist ein System beschrieben, gemäss welchem ein granulatförmiges Filtermedium in der Regenerierphase im Filterbett nach unten fällt, dabei vom Staube befreit und anschließend durch ein zentrales Förderrohr mittels an der unterer Förderrohr-Eintritts-öffnung eingeblasener Druckluft nach oben befördert wird. Das Transportgas, welches für die Förderung im Förderrohr verwendet wurde, wird hierbei dem Rohgasraum zugeleitet. Dieses System, das bereits in der industriellen Praxis getestet wurde, ist jedoch mit einem erheblichen Nachteil verbunden. Das an der Mündung der zur Beschickung des Förderrohrs mit Druckluft verwendeten Leitung erforderliche Sieb muß notwenidgerweise so gewählt werden, daß dessen Maschenweite kleiner ist als die kleinste Körnung des darüber befindlichen Granulats. So hat es sich als praktisch unvermeidbar erwiesen, daß sich die Siebmaschen nach kurzer Betriebszeit mit Staub verstopfen, was die Förderung des Granulates schwächt. Außerdem ist der zwischen der Mündung des Druckluftrohres und der Eintrittsöffnung des Förderrohres erforderliche Abstand eine weitere Quelle von Druckverlust und seitlichen Abströmens der Druckluft. Es ergibt sich daher erfahrungsgemäß eine unerwünschte Variabilität im Förderstrom des Förderrohrs, was nach kurzzeitigem pulsierendem Betrieb zum Zusammenbruch des Fördersystems führt.

Der gleiche Nachteil gilt für das in der FR-A-2 350 128 beschriebene System.

Durch die FR-A-2 322 649 ist es ferner bekannt, das untere Ende eines zentralen Förderrohres porös und damit luftdurchlässig auszubilden und oberhalb der oberen Förderrohr-Austrittsmündung ein Ablenkorgan anzuordnen.

Es ist somit die Aufgabe der vorliegenden Erfindung ein Verfahren sowie eine Vorrichtung zur regenerierenden Reinigung eines granulatförmigen Filterbetts vorzuschlagen, welche die Nachteile der bekannten Anlagen vermeiden und insbesondere eine einwandfreie Förderung des Filtermediums während der Regenerierphase bei klar definierten und regelbaren Strömungszuständen des Filtermediums gewährleisten. Die zur Durchführung des Verfahrens dienende Vorrichtung soll dabei unter möglicher Vermeidung von Sieben und ähnlichen, eine periodische Putzarbeit erfordernden Elementen einwandfrei funktionieren, dank ihrer Regulierungsmöglichkeiten eine Abstimmung auf optimale Betriebsverhältnisse zulassen und unabhängig von Schwankungen des Rohgasdruckes bzw. der Rohgasfördermenge einen praktisch konstanten Transport des Filtermediums gewährleisten.

Die erfindungsgemäße Lösung dieser Aufgabe ist in den Patentansprüchen 1 und 2 gekennzeichnet. Weitere Einzelheiten der Erfindung ergeben sich aus den abhängigen Ansprüchen und der folgenden Beschreibung.

Nachstehend wird anhand der beiliegenden Zeichnung ein Ausführungsbeispiel des Erfindungsgegenstandes beschrieben.

Figur 1 ist ein schematisch vereinfachter Vertikalschnitt einer solchen, zur intermittierenden Regenerierung eines Filtermediums dienenden Vorrichtung,

Figur 2 zeigt die in Fig. 1 dargestellte Vorrichtung in einer anderen Betriebsphase,

Figur 3 ist ein Vertikalschnitt im unteren Förderrohrbereich und

Figur 4 zeigt eine Variante eines Distanzelementes.

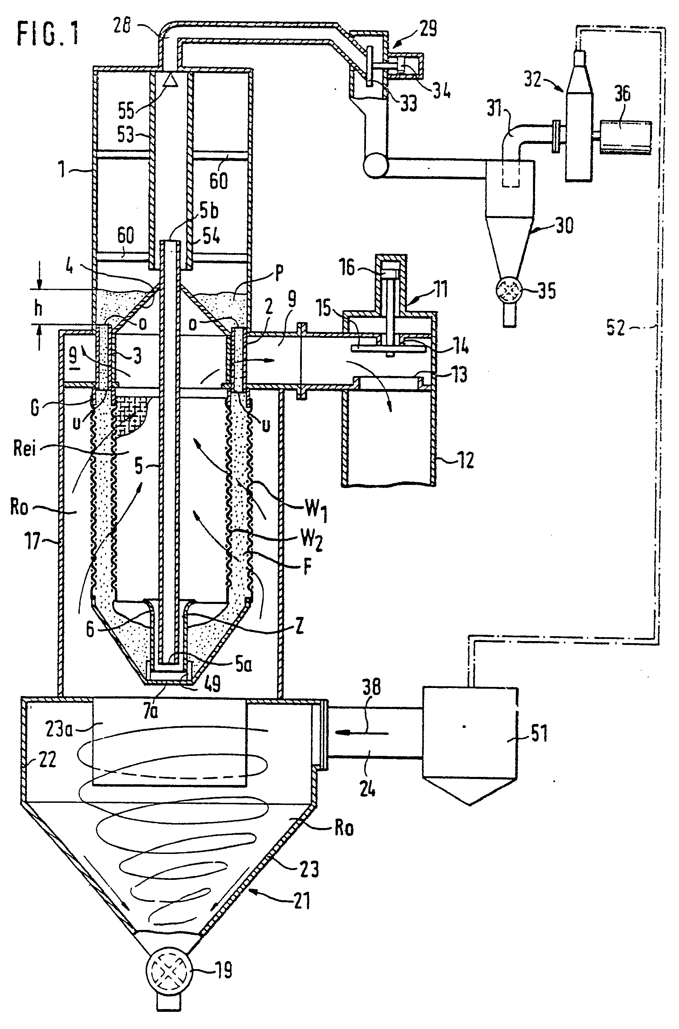

Die in Fig. 1 unter Verzicht auf unwesentliche Einzelheiten dargestellte Vorrichtung weist ein Gehäuse 1 von praktisch quadratischem oder kreisförmigem Querschnitt auf. Das bis zur Stelle G sich erstreckende, gasundurchlässige Gehäuse 1 umschliesst in seinem untern Abschnitt eine Reihe von Füllrohren 2, die im gegenseitigen Abstand befestigt und von einem ebenfalls gasundurchlässigen Innengehäuse 3 gehalten sind. Sämtliche Füllrohre 2 sind mit oben offenen Mündungen o versehen und münden mit ihren unteren Oeffnungen u in ein Filterbett F, das von zwei konzentrischen, in gegenseitigem Abstand angeordneten gasdurchlässigen Wänden $W_1$ und $W_2$ begrenzt wird. Diese beiden Wände $W_1/W_2$, welche beispielsweise als Metallgeflechte ausgebildet sein können, sind am unteren Rand der Füllrohre 2 aufgehängt, so dass ein von oben durch die Füllrohre 2 herabfallendes Granulat in das Filterbett F gelangt. Der obere Abschnitt der Rohre 2 wird wie erwähnt nach innen von einer gasundurchlässigen Abdeckung 3 begrenzt, die sich nach oben in Form einer pyramidenstumpfförmigen Kappe 4 fortsetzt. Abdeckung 3 und Kappe 4 sind vorzugsweise ein einziges Teil, das über nicht dargestellte Befestigungsrippen an der Innenwand des Gehäuses 1 befestigt ist. An der Oberkante der Kappe 4 ist ein Förderrohr 5 aufgehängt, welches sich koaxial zu dem durch die gasdurchlässigen Wände $W_1/W_2$ gebildeten Filterbett F nach unten erstreckt und ebenfalls beidseitig offen ist. Der untere Abschnitt des Förderrohres 5 ragt in ein Distanzelement 6, das bei dieser Ausführungsform als zylindrischer Rohrabschnitt ausgebildet und so angeordnet ist, dass zwischen dem unteren Förderrohrabschnitt und dem Distanzelement 6 eine Leitmittel-Eintrittsöffnung Z in Form eines Zwischenraums verbleibt.

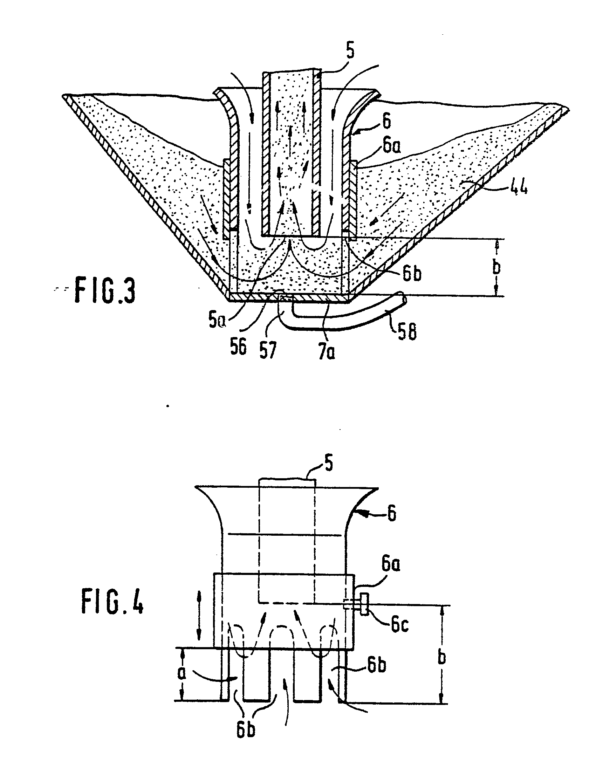

Der Eintrittsbereich des Förderrohres 5 ist demgemäß von dem rohrförmigen Distanzelement 6 umgeben, das sich auf den darunter befindlichen Boden abstützt. Im unteren Endabschnitt weist dieses Distanzelement mehrere nach unten offene Schlitze 6b (Fig.4) auf, welche über die untere Eintrittsöffnung 5a des Förderrohres 5 hinaufreichen. Am Umfang des Distanzelementes 6 ist eine kreiszylindrische Abdeckhülse 6a verschiebbar gelagert. Diese Abdeckhülse kann durch ein an sich bekanntes Fixierorgan, beispielsweise eine Schraube 6c, in einer beliebigen Höhe arretiert werden, so daß sie die Umfangsschlitze 6b des Distanzelementes 6 zum Teil verdeckt.

Unterhalb der Eintrittsöffnung 5a des Förderrohres 5 ist in dem darunter befindlichen Boden ein Siebeinsatz 56 angeordnet, unter welchem sich eine mit Druckluft beschickte Blasdüse 57 befindet. Ueber eine Rohrleitung 58 ist die Blasdüse 57 an eine Druckluftquelle angeschlossen, wobei die Druckluftzufuhr durch ein Absperrventil nach Belieben geöffnet bzw. geschlossen werden kann.

Durch die im unteren Abschnitt der Distanzhülse 6 angeordneten Umfangsschlitze 6b wird erreicht, daß das nach unten strömende Granulat zungenförmig in den von der Distanzhülse umschlossenen Raum eindringt und oberhalb dieses eindringenden Granulates immer noch genügend Raum für die Förderluft bleibt, welche von oben durch den Ringraum zwischen Distanzhülse 6 und Förderrohr 5 nach unten strömt und im Bereich der unteren Förderrohr-Eintrittsöffnung 5a in das Förderrohr umgelenkt wird. Dabei reisst diese Förderluft das im Umlenkbereich befindliche Granulat nach oben durch das Förderrohr mit.

Im Falle einer Betriebsstörung, beispielsweise eines Stromausfalles, kann es vorkommen, dass das am Förderrohr angreifende Vakuum ausfällt und das im Förderrohr befindliche Granulat nach unten fällt, wobei bei solchen unvorhergesehenen Störungen damit gerechnet werden muss, dass die Anlage nicht plötzlich abgestellt wird, sondern noch mehrere Sekunden mit langsam absinkendem Vakuum in Betrieb ist. Dabei kann es vorkommen, dass sich der zwischen dem Förderrohr 5 und der Distanzhülse 6 befindliche Ringraum bis in das Förderrohr teilweise mit Granulat füllt, was das erneute Anfahren der Einrichtung sehr erschweren würde. Zu diesem Zwecke ist die bereits erwähnte Blasdüse 57 angeordnet. Soll die Einrichtung somit nach einer der erwähnten Störungen wieder angefahren werden, so genügt es, das Absperrventil kurzzeitig zu öffnen, wobei das unterhalb des Förderrohreintritts befindliche Granulat durch das Förderrohr nach oben mitgerissen wird, so dass der Normalbetrieb durch das nun einsetzende Vakuum störungsfrei aufgenommen werden kann. Dabei ist darauf zu achten, dass das Vakuum gleichzeitig mit, vorzugsweise jedoch vor, dem Einschalten der Pressluft einsetzt.

Die obere mit 5b bezeichnete Austrittsmündung des Förderrohres ist von einem zylindrischen Trennrohr 53 umgeben, das über Rippen 60 an der Gehäusewand aufgehängt sein kann und dessen Innendurchmesser in jedem Fall grösser ist als derjenige des Förderrohres 5. Der untere Abschnitt des Trennrohres 53 ist so über die obere Förderrohrmündung geschoben, dass sich ein freier Ringraum 54 ergibt, der nach unten zu, d. h. in Richtung des mit P bezeichneten Granulatpuffers, offen ist. Das Trennrohr 53 erstreckt sich über eine beträchtliche Länge, die in jedem Falle ein Mehrfaches seines Durchmessers beträgt, nach oben und mündet dann in eine Absaugeleitung 28, vor deren Eintrittsmündung ein Ablenkorgan 55 angeordnet ist.

Bei der regenerierenden Reinigung des Granulates wird dasselbe durch das Förderrohr 5 nach oben gesaugt und tritt mit relativ hoher Geschwindigkeit aus der oberen Förderrohrmündung 5b aus. Beim Eintritt in das Trennrohr 53 verlangsamt sich jedoch das vom Fördergasstrom mitgeführte Granulat und fällt nach unten, wobei es durch den Zwischenraum 54 zwischen Förderrohr 5 und Trennrohr 53 in die Pufferzone P und von dieser über die Fallrohre 2 in das Filterbett F gelangt. Der im Fördergasstrom mitgeführte Staub wird dagegen vom Fördergas über die Absaugeleitung 28 zum Abscheider 30 geführt und von diesem über ein Luftabschluss- und Staubaustragsorgan 35 ausgetragen.

Die Funktion des Ablenkelementes 55 besteht darin, eventuell bis zu dieser Stelle vorgedrungene Granulatpartikel so abzulenken, dass sie dennoch nach unten fallen und nicht in die Absaugeleitung 28 gelangen.

Die mit der beschriebenen Einrichtung gefahrenen Versuche haben gezeigt, dass sich dank der beschriebenen Ausbildung der Schlitze 6b an der Distanzhülse 6 ein einwandfreier Uebergang des Granulates vom Filterbett in das Förderrohr ergibt, während andererseits durch die beschriebene, im Trennrohr 53 erfolgende Trennung von Granulat und Staub eine grösstmögliche Schonung des Granulates erreicht wird. Der in derartigen Anlagen äusserst störende Abrieb des Granulates kann somit auf ein Minimum reduziert werden.

Eine weitere Schonung des Granulats erfolgt auch an der Eintrittsöffnung 5a des Förderrohres 5. Wie insbesondere Fig. 3 zeigt, wird das Granulat während der Förderung vom unteren Öffnungsrand der Eintrittsöffnung 5a des Förderrohrs ferngehalten, da die an diesem Bereich umgelenkte Luft die Tendenz hat, das Granulat von oben her zu erfassen und gegen die Mitte des Förderrohrs zu transportieren. Erst anschließend verteilt sich dann das Granulat auf den gesamten Förderrohrquerschnitt.

Die Aufhängung des Förderrohres im oberen Abschnitt der Halterung 4 (Fig. 1) ist vorzugsweise mit bekannten Mitteln so realisiert, dass sich das Förderrohr um mehrere Zentimeter in der Höhe verstellen lässt.

Wie Fig. 1 zeigt, mündet in den vom Filterbett F umschlossenen Raum, der hinfort als Reingasraum Rei bezeichnet wird, ein Ringkanal 9, welcher an mehreren Stellen zwischen zwei benachbarten Rohren 2 hindurchgeführt ist.

Der ringförmige Kanal 9 führt über ein Steuerventil 11 in einen Reingaskanal 12. Das Steuerventil 11 weist einen unteren Ringsitz 13 und einen oberen Sitz 14 auf, zwischen welchen ein Verschlussorgan 15 über einen an sich bekannten, beispielsweise pneumatisch betätigten Kolben 16 bewegt werden kann. In der Betriebsphase nach Fig. 1 liegt das Verschlussorgan 15 am oberen Sitz 14 an und gibt damit den Weg von der Ringleitung 9 in den Reingaskanal 12 frei.

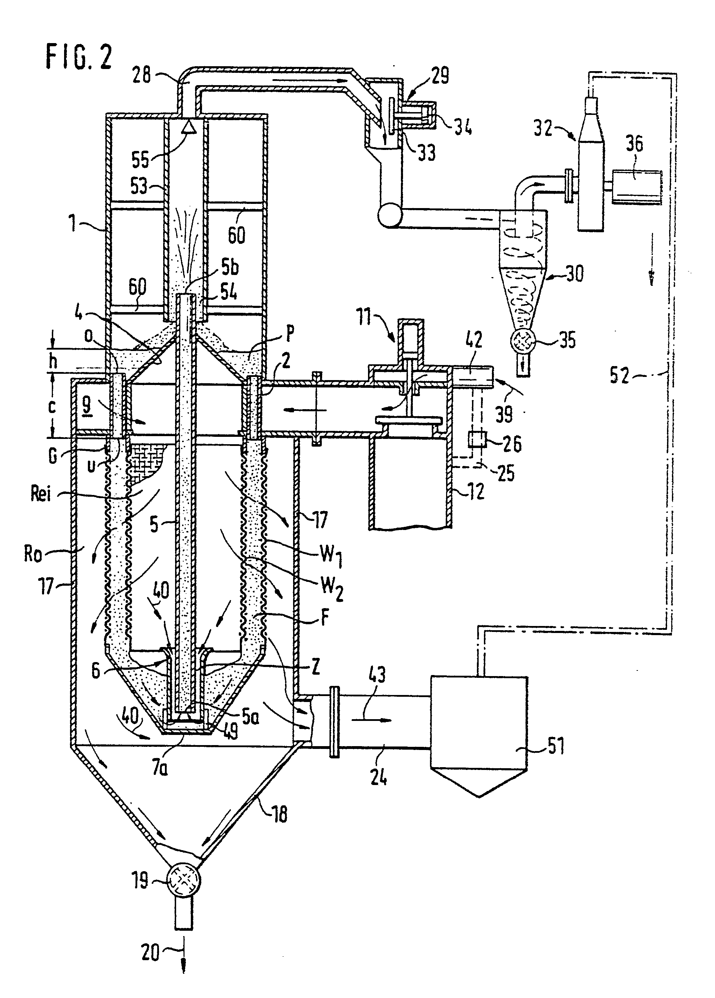

Gemäss Fig. 1 ist ferner im Abstand vom Filterbett F ein weiteres Gehäuse 17 von kreisförmigem Querschnitt angeordnet, so dass zwichen dem Filterbett F und dem Gehäuse 17 ein Rohgasraum Ro gebildet wird. Unterhalb des Gehäuses 17 kann, wie Fig. 2 zeigt, ein Sammeltrichter 18 angeordnet sein, welcher den durch Schwerkraft in der Regenerierphase herabfallenden Staub nach unten in einen Förderer 19 leitet, von welchem er in Richtung des Pfeiles 20 ausgetragen werden kann. Bei einer bevorzugten Ausführungsform weist die Einrichtung jedoch anstelle eines einfachen Sammeltrichters 18 eine Vorabscheidevorrichtung (Fig. 1) auf, welche ein zylindrisches Oberteil 22 mit einem inneren Einsatz 23a sowie einem kegelstumpfförmigen Sammeltrichter 23 besitzt. Die mit 24 bezeichnete Rohgasleitung mündet tangential in das Oberteil 22, wobei durch die Zyklonwirkung eine Vorabscheidung des im Rohgas mitgeführten Staubes eintritt und der Staub in Richtung der Pfeile nach unten in den Förderer 19 fällt.

Die an das Gehäuse 1 angeschlossene Absaugeleitung 28 führt über ein Ventil 29 zu dem Zyklonabscheider 30, der über eine weitere Verbindungsleitung 31 an ein Gebläse 32 angeschlossen ist. Das Ventil 29 weist in bekannter Weise ein Verschlussorgan 33 auf, das über einen pneumatisch oder hydraulisch betätigbaren Kolben 34 bewegt werden kann. Der Zyklonabscheider 30 ist dem Fachmann bekannt und braucht daher in seiner Konstruktion nicht beschrieben zu werden. Er mündet in ein Luftabschluss- und Staubaustragsorgan 35. Das Gebläse 32 ist durch einen Motor 36 angetrieben und so geschaltet, dass in den vorgeschalteten Apparaten und Leitungen, d. h. insbesondere in dem Trennrohr 53, ein Unterdruck entsteht.

Nachdem die auf der Zeichnung dargestellte Einrichtung in ihren wesentlichen konstruktiven Teilen beschrieben ist, kann nun auf deren verfahrenstechnische Seite eingegangen werden. Dabei muss eine Rohgasreinigungsphase unterschieden werden, in welcher die Anlage von dem staubbeladenen Rohgas durchströmt und vom mitgeführten Staub befreit werden soll. Diese Phase zeigt Fig. 1. Sie kann periodisch von Regenerierphasen unterbrochen werden, in welchen der sich im granulatförmigen Bett F ansammelnde Staub wiederum aus demselben entfernt wird. Diese Regenerierphase ist der Darstellung nach Fig. 2 zugrunde gelegt.

Das Rohgas tritt in Richtung des Pfeiles 38 (Fig. 1) durch den Rohgaskanal 24 in den Vorabscheider 21 ein und wird hier zunächst von einem Teil des mitgeführten Staubes befreit. Anschliessend gelangt das immer noch staubbeladene Rohgas in Richtung der gekrümmten Pfeile nach oben und strömt hier vom Rohgasraum Ro durch das Filterbett F in den Reingasraum Rei. Dabei bleibt der mitgeführte Staub an dem granulatförmigen Filtermedium hängen, während das Reingas über die Ringleitung 9 und das geöffnete Ventil 11 in die Reingasleitung 12 abströmen kann.

Bei intermittierendem Betrieb wird in der Regenerierphase gemäss Fig. 2 das Ventil 11 so verstellt, dass es den Reingaskanal 12 verschliesst, dagegen den Zustrom der Spülluft zulässt. Die in Richtung des Pfeiles 39 zuströmende Spülluft gelangt über ein Gebläse 42 und das geöffnete Ventil 11 in Pfeilrichtung durch den Ringkanal 9 in den Reingasraum Rei, von wo aus sie das Filtermedium F in Richtung der gekrümmten Pfeile (Fig. 2) von innen nach aussen durchströmt, den im Filtermedium befindlichen Staub mitreisst und den Rohgasraum durch den Rohgas-Eintrittskanal 24 (Pfeil 43) verlässt. Ein Teil des Staubes fällt dabei in Richtung der Pfeile nach unten in den Bereich des Luftabschluss- und Staubaustragsorgans 19.

Da mit der Einleitung der Regenerierphase aber gleichzeitig das Gebläse 32 in Betrieb genommen wurde, entstand damit im Bereich oberhalb des Förderrohres 5 ein starker Unterdruck, der sich auf das unterhalb des Förderrohres 5 befindliche Filtermedium als intensiver Sog auswirkt.

Wie in Fig. 2 durch die Pfeile 40 angedeutet ist, gelangt ein Bruchteil der Spülluft durch die im Zwischenraum Z auftretende Sogwirkung nach unten und wird durch diesen Sog durch die untere Eintrittsöffnung 5a des Förderrohres 5 in dasselbe hineingerissen. Das aus dem Filterbett F nach unten austretende granulatförmige Filtermedium bildet im Umfangsbereich des Distanzelementes 6 einen Böschungskegel 44 (Fig. 3), von welchem aus das Filtermedium durch die unteren Umfangsschlitze 6b von der Höhe a (Fig. 4) in den Bereich der von oben einströmenden Spülluft (Pfeile Fig. 3) gelangt und von dieser in das Förderrohr 5 mitgerissen wird. Der Uebertritt des granulatförmigen Mediums aus dem Böschungsbett 44 in den Ansaugbereich des Förderrohres 5 erfolgt einerseits durch Schwerkraft, andererseits durch den im Förderrohr erzeugten Sog und die dadurch unterhalb des Förderrohres entstehende Förderluftbewegung Durch entsprechende Abstimmung der beiden Abstände a und b lässt sich eine reibungslose und kontinuierliche Ueberführung des granulatförmigen Mediums aus dem Böschungsbett 44 in das Förderrohr 5 erreichen.

Das Filtermedium wird somit innerhalb des Förderrohres 5 in Pfeilrichtung nach oben gerissen, und beim Uebergang in das Trennrohr 53 abgebremst, wobei das Granulat inanbetracht seines höheren spezifischen Gewichtes durch die untere, ringförmige Trennrohröffnung nach unten fällt. Der im Förderrohr 5 mitgeführte Staub wird dagegen dank seines geringeren Gewichtes von der Spülluft nach oben mitgerissen und strömt durch die Verbindungsleitung 28 über das nun geöffnete Ventil 29 in den Zyklonabscheider 30, in welchem der mitgeführte Staub nach unten über den Austragförderer 35 abgeschieden wird. Vom Gebläse 32 kann die vom Staub befreite Spülluft über eine Rückführleitung 52 in die Rohgashauptleitung 51 (Sammelkanal) eingeleitet werden.

Die gasdurchlässigen Wände $W_1/W_2$, welche das Filtermaterial enthalten, weisen einen gegenseitigen Abstand zwichen 30 und 150 mm auf, wobei die bevorzugte Variante einen Abstand zwischen 45 und 60 mm besitzt. Durch eine gegenseitige Abstimmung der Abstände a und b (Fig. 3 und 4) und der Stärke des oberhalb des Förderrohres angelegten Vakuums lässt sich erreichen, dass das granulatförmige Filtermedium einerseits kontinuierlich über das Böschungsbett 44 in den Sogbereich des Förderrohres gelangt, während andererseits oberhalb der Füllrohrmündungen o (Fig. 1) eine ausreichende Menge von Granulat vorhanden ist, um den kontinuierlichen Nachschub von Filtermedium durch die Füllrohre 2 zu gewährleisten. Diese oberhalb der Füllrohrmündungen o befindliche Granulatmenge P, welche eine vorbestimmte Höhe h nicht unterschreiten sollte, übt somit eine gewisse Pufferwirkung aus und gewährleistet, dass die Füllrohre 2 stets gleichmässig mit Filtermedium beschickt werden und der Durchtrittswiderstand für das Gas über die gesamte Filterrohrlänge praktisch konstant ist.

Die vorliegende Beschreibung nimmt auf eine Einrichtung Bezug, welche — wie der Fachmann weiss — in der industriellen Praxis selten allein, sondern in den meisten Fällen mit mehreren solcher parallelgeschalteter Einrichtungen zu einem System zusammengebaut ist. Durch entsprechende, dem Fachmann bekannte Anordnungen von Steuerventilen lässt sich aus diesem System jeweils eine derbeschriebenen Einrichtungen in der Regenerierphase fahren, während die übrigen Einrichtungen für den Rohgasreinigungsbetrieb zur Verfügung stehen.

In der Rohgas-Reinigungsphase nach Fig. 1 ist das Ventil 29 normalerweise geschlossen und der Absaugeventilator 32 ausser Betrieb. Dies gilt jedoch nur für den intermittierenden Betrieb, in welchem die Rohgasreinigung während der Regenerierung des Granulats unterbrochen wird und während der Rohgasreinigung keine Granulatregenerierung erfolgt. Bei dem ebenfalls möglichen kontinuierlichen Betreib kann die Regenerierung gleichzeitig mit der Rohgasreinigung erfolgen.

Das in der Ausführungsform gemäss Fig. 3 und 4 verwendete Distanzelement 6 ist lediglich ein Ausführungsbeispiel und kann vom Fachmann in verschiedenster Art abgewandelt werden.

So zeigt Fig. 1 eine vereinfachte Variante, gemäss welcher sich das zylindrische Distanzelement 6 über Füsse 49, die in gegenseitigen Abständen angeordnet sind, auf den Boden 7a abstützt.

Wenn in bezug auf die vorliegenden Ausführungsbeispiele von Reingas die Rede war, so kann, wie im Zusammenhang mit dem Ausführungsbeispiel bereits erwähnt, zur Förderung des Filtermaterials durch das Förderrohr 5 sowohl Reingas als auch Spülgas verwendet werden. Die Schaltung der Einrichtung mit Spülgasförderung zeigt Fig. 2. Bei der Variante, welche das Reingas zur Förderung des Filtermediums verwendet, fehlt das Ventil 11. Wie bereits beschrieben, tritt das Rohgas durch den Rohgaskanal 24 in den Rohgasraum Ro der Einrichtung ein, durchquert das Filterbett F und verlässt den Reingasraum Rei durch den Kanal 9. Durch den im Förderrohr 5 erzeugten starken Sog wird nun ein Teil des im Reingasraum befindlichen Reingases in Pfeilrichtung (Fig. 2) durch den Ringraum zwischen Distanzelement 6 und Förderrohr 5 eingesaugt und bewirkt das Mitreissen des Filtermediums, wie dies anhand von Fig. 2 bereits beschrieben wurde.

Die Regenerierung des Filtermediums kann hierbei entweder kontinuierlich oder diskontinuierlich erfolgen, je nachdem, ob der Zyklon 30 und das Gebläse 32 ständig oder nur intermittierend in Betrieb sind.

Der Ordnung halber sei noch erwähnt, dass als Reingas sämtliches Gas bezeichnet wird, welches das Filterbett F einmal durchströmt hat und sich somit im Reingasraum befindet.

Die erfindungsgemässe Einrichtung kann somit entweder diskontinuierlich oder kontinuierlich regeneriert werden. Als Fördergas für die Förderung des Filtermediums durch das Förderrohr 5 lässt sich dabei in beiden Betriebsarten sowohl Reingas als auch ein spezielles Spülgas verwenden.

Bei der Regenerierung des granulatförmigen Filtermaterials verhalten sich die Fördermengen von Rohgas zu Spülgas zu Fördergas gemäss einem bevorzugten Ausführungsbeispiel etwa wie 100 : 15 : 2. Der Anteil des Fördergases am Spülgas liegt somit bei etwa 10-15 %.

Der Uebergang des Granulates vom Trennrohr 53 ins Filterbett F kann vom Fachmann im Rahmen des Erfindungsgedankens in mannigfaltiger Weise variiert werden. So könnte man z. B. die Füllrohre 2 durch zwei gasundurchlässige Wände ersetzen und/oder auf der Kappe 4 eine Anzahl geneigter Füllrohre anbringen.

Falls statt eines speziellen Spülgases das Reingas zur Regenerierung verwandet werden soll, so kann das Gebläse 42 (Fig. 2) mit dem Reingaskanal 12 über eine Verbindungsleitung 25 verbunden werden, die mit einem Absperrventil 26 versehen sein kann.

Als Fördergas können ausser Luft auch andere Gase oder Gasmischungen, z. B. inerte Gase, verwendet werden.

**Patentansprüche**

1. Verfahren zur regenerierenden Reinigung eines mit Verunreinigungen beladenen granulatförmigen Filtermediums, das zwischen gasdurchlässigen Wänden (W1, W2) eines vertikal gerichteten Filterelements ein Filterbett (F) bildet und zumindest teilweise während einer Regenerationsphase vom unteren Bereich des Filterelements in eine untere Förderrohr-Eintrittsöffnung (5a) eines im Zentrum des Filterelements angeordneten Förderrohrs (5) hinein und in diesem Förderrohr nach aufwärts gesogen und einem oberhalb des Filterelements in einer Abscheideeinrichtung (1, 53, 54, 29) erfolgenden Trennungsprozeß zugeführt wird, bei dem die Verunreinigungen von dem Filtermedium abgeschieden werden, wobei dann das gereinigte Filtermedium am oberen Bereich des Filterelements wieder dem Filterbett zugeführt wird, gekennzeichnet durch eine Mengenregulierung des im unteren Bereich des Filterelements zur unteren Förderrohr-Eintrittsöffnung (5a) hingeleiteten granulatförmigen Filtermediums in der Weise, daß die Obergrenze des jeweils in den Umgebungsbereich der Förderrohr-Eintrittsöffnung (5a) gelangenden Anteils des Filtermediums unterhalb des unteren Öffnungsrandes dieser Eintrittsöffnung liegt und eine fluidisierte Zone aus dem besagten Anteil des Filtermediums im Umgebungsbereich der unteren Förderrohr-Eintrittsöffnung (5a) unter Ausnutzung der Saugwirkung im Förderrohr (5) sowie einer Zufuhr von Rein- oder Spülgas zu diesem Anteil des Filtermediums aus einem oberhalb der Förderrohr-Eintrittsöffnung liegenden Bereich gebildet wird.

2. Vorrichtung zur Durchführung des Verfahrens nach Anspruch 1, dadurch gekennzeichnet, daß das Förderrohr (5) an seiner unteren Förderrohr-Eintrittsöffnung (5a) in radialem Abstand von einem Strömungsleitelement (6) umgeben ist, welches an seinem der Förderrohr-Eintrittsöffnung (5a) zugewandten Abschnitt verstellbare Leitmittel (6a, 6b) zur Regulierung der Granulatobergrenze bezüglich der Förderrohr-Eintrittsöffnung (5a) aufweist und an seinem dieser Eintrittsöffnung gegenüberliegenden Abschnitt eine kreisringförmige Leitmittel-Eintrittsöffnung (Z) besitzt, die zum Rein- oder Spülgasraum des Filterelements hin offen ist.

3. Vorrichtung nach Anspruch 2, dadurch gekennzeichnet, daß das Strömungsleitelement ein das Förderrohr (5) umgebendes, an beiden Stirnseiten offenes zylinderrohrförmiges Distanzelement (6) ist, dessen Unterkante unterhalb der unteren Förderrohr-Eintrittsöffnung (5a) liegt, dabei jedoch zwischen dieser Eintrittsöffnung und einem im Abstand (a) darunter befindlichen Boden (7a) mindestens eine Zuströmöffnung freiläßt und daß das genannte Distanzelement (6) einerseits am Förderrohr-Umfang auf Abstand befestigt und andererseits über Füße (49) auf dem besagten Boden (7a) abgestützt ist.

4. Vorrichtung nach Anspruch 2, dadurch gekennzeichnet, daß das Strömungsleitelement ein verschiebbar auf dem Förderrohr (5) gelagertes Distanzelement (6) ist, derart, daß der Abstand (a) zwischen der Unterkante des Distanzelements (6) und dem darunter befindlichen Boden (7a) durch eine Verschiebung des Distanzelements (6) relativ zum Förderrohr (5) veränderbar ist und daß das Förderrohr (5) veränderbar ist und daß das Förderrohr (5) an einer an dessem oberen Bereich vorgesehenen Halterung (4) verstellbar geführt ist, damit der Abstand (b) der Förderrohr-Eintrittsöffnung (5a) zum Boden (7a) durch eine entsprechende Relativverlagerung des Förderrohrs (5) veränderbar ist.

5. Vorrichtung nach Anspruch 3 oder 4, dadurch gekennzeichnet, daß das Distanzelement (6) mehrere längsgerichtete Umfangsschlitze (6b) aufweist und über die entsprechenden Schlitzstege auf dem Boden (7a) abgestützt ist, wobei die Schlitze ein seitliches Zuströmen des Granulats aus dem unteren Bereich des Filterelements zur Förderrohr-Eintrittsöffnung (5a) gestatten, und daß auf dem Umfang des Distanzelements (6) eine verschiebbar gelagerte Abdeckhülse (6a) angeordnet ist, welche zur partiellen Abdeckung der genannten Schlitze (6b) des Distanzelementes (6) in einer entsprechenden Höhenlage auf dem Distanzelement fixierbar ist.

6. Vorrichtung nach Anspruch 4 oder 5, dadurch gekennzeichnet, daß der unterhalb der Förderrohr-Eintrittsöffnung (5a) liegende Boden (7a) einen Siebeinsatz (56) aufweist und daß unterhalb des Bodens eine Blasdüse (57) zum zusätzlich steuerbaren Einblasen von Druckluft angeordnet ist.

7. Vorrichtung nach einem der Ansprüche 4 bis 6, dadurch gekennzeichnet, daß die das Förderrohr (5) höhenverstellbar abstützende Halterung (4) eine kegelstumpfförmige Kappe ist, die eine solche Höhe besitzt, daß aus der Abscheideeinrichtung (1, 53, 5, 429) austretendes Granulat sich oberhalb des Filterelements in Form eines Granulatpuffers (P) in einer vorgegebenen Mindesthöhe (h) ansammelt.

8. Vorrichtung nach Anspruch 2, dadurch gekennzeichnet, daß das obere der Abscheideeinrichtung zugewandte Ende des Förderrohr (5) in ein Trennrohr (53) mündet, dessen Innendurchmesser größer ist als der Außendurchmesser des Förderrohrs und das an seinem dem Förderrohr gegenüberliegenden Ende mit einer Vakuumquelle (22) verbunden ist und daß der zwischen dem Trennrohr (53) und dem Förderrohr (5) bestehende Zwischenraum (54) nach unten offen ist.

## Claims

1. Process for the regenerative purification of a filter medium in granulate form charged with impurities which forms a filter bed (F) between the gas-permeable walls (W1, W2) of a vertically positioned filter element and which is sucked upwards at least partially during a regeneration phase from the lower area of the filter element into a lower inlet opening (5a) of a conveying tube (5) arranged in the centre of the filter element and is sucked upwards in this conveying tube and fed into a separation process taking place above the filter element in a separating apparatus (1, 53, 54, 22) in which the impurities are separated from the filter medium and the purified filter medium is fed back into the filter bed in the upper region of the filter element, characterised by regulation of the quantity of granular filter medium fed into the lower inlet opening 5a of the conveying tube in the lower region of the filter element so that the upper limit of the portion of the filter medium arriving in the vicinity of the inlet opening (5a) of the conveying tube is below the lower edge of this inlet opening and a fluidised zone is formed from the said portion of the filter medium in the vicinity of the lower inlet opening (5a) of the conveying tube, using the suction in the conveying tube (5) as well as a supply of cleaning or flushing gas into this portion of the filter medium from an area above the inlet opening of the conveying tube.

2. Apparatus for performing the process as claimed in claim 1, characterised in that the conveying tube (5) at its lower inlet opening (5a) is surrounded at a radial spacing therefrom by a flow guiding element (6) which comprises on its portion facing the inlet opening (5a) of the conveying tube, adjustable guide means (6a, 6b) for regulating the upper limit of the granulate with regard to the inlet opening (5a) of the conveying tube and which comprises on its portion oppo-site this inlet opening, a circular guiding inlet opening (Z) which is open towards the cleaning or flushing gas chamber of the filter element.

3. Apparatus as claimed in claim 2, characterised in that the flow guiding element is a spacer (6) in the form of a cylindrical tube open at both ends and surrounding the conveying tube (5), the lower edge of this spacer being located below the lower inlet opening (5a) of the conveying tube, whilst between this inlet opening and a base (7a) located at a spacing (a) below it, there is at least one inflow opening and the said spacer (6) is secured, on the one hand, to the conveying tube at a spacing therefrom and, on the other hand, on the said base (7a) via feet (40).

4. Apparatus as claimed in claim 3, characterised in that the flow guiding element (6) displaceably ... in such a way that the spacing (a) between the lower edge of the spacer (6) and the base below it can be varied by displacing the spacer (6) relative to the conveying tube (5) and in that the conveying tube (5) is adjustably guided on a holder (4) provided on the upper area thereof, so that the spacing (b) of the inlet opening (5a) of the conveying tube from the base (7a) can ... by suitable relative displacement of the conveying tube (5).

5. Apparatus as claimed in claim ..., characterised in that the spacer (6) has a plurality of longitudinally directed ... (6c) and is supported on the base (7a) via the corresponding slotted ..., the slots permitting ... inflow of the granulate from the ... the filter element into the inlet opening (5a) of the conveying tube, and in that there is mounted on the circumference of the spacer (6) a displaceably mounted covering sleeve (6a) which ... at a suitable vertical position ... order to partially cover the above mentioned slots (6b) of the spacer (6).

6. Apparatus as claimed in claim 4 or 5, characterised in that the base (7a) located below the inlet opening (5a) of the conveying tube has a screening insert (50) and in that ... (57) is provided below the base for blowing in additional compressed air in a ... manner.

7. Apparatus as claimed in ..., characterised in that the holder (4) which ... ports the conveying tube (5) in a vertically adjustable manner is a truncated cone shaped cover, the height of which is such that the granulate leaving the separating apparatus (1, 53, 54, 22) ... of a granulate buffer (P) with a given minimum height (h).

8. Apparatus as claimed in claim 2, characterised in that the ... (5) nearest the separating apparatus opens into a separating tube (53) the internal diameter of which is greater than the external diameter of the conveying tube and which is connected to a vacuum source (22) at its end opposite the ...

veying tube and in that the gap (54) between the separating tube (53) and the conveying tube (5) is open at the bottom.

## Revendications

1. Procédé pour la purification régénérante d'un agent filtrant granulaire chargé d'impuretés qui forme un lit filtrant (F) entre des parois perméables au gaz (W1, W2) d'un élément filtrant orienté verticalement et peut être aspiré au moins pour partie pendant une phase de régénération à partir de la zone inférieure de l'élément filtrant dans un orifice d'entrée inférieur (5a) d'un tube de transport (5) installé au centre de l'élément filtrant et vers le haut dans ce tube de transport et être amené à un processus de séparation qui s'effectue dans un dispositif séparateur (1, 53, 54, 29) au-dessus de l'élément filtrant, au cours duquel les impuretés sont séparées de l'agent filtrant, l'agent filtrant purifié étant alors renvoyé dans la zone supérieure de l'élément filtrant dans le lit filtrant, caractérisé par une régulation de la quantité de l'agent filtrant granulaire amenée à l'orifice d'entrée inférieur (5a) du tube de transport dans la zone inférieure de l'élément filtrant de manière que la limite supérieure de la fraction de l'agent filtrant parvenant chaque fois dans la zone environnant l'orifice d'entrée (5a) du tube de transport se trouve en dessous du bord inférieur de cet orifice d'entrée et qu'une zone fluidisée soit formée de ladite fraction de l'agent filtrant dans la zone environnant l'orifice d'entrée inférieur (5a) du tube de transport par exploitation de l'effet d'aspiration dans le tube de transport (5) et par apport de gaz pur ou de lavage à cette fraction de l'agent filtrant à partir d'une zone située au-dessus de l'orifice d'entrée du tube de transport.

2. Dispositif pour réaliser le procédé suivant la revendication 1, caractérisé en ce que le tube de transport (5) est entouré, au niveau de son orifice d'entrée inférieur (5a), à une certaine distance radiale, par un élément canaliseur d'écoulement (6) qui comporte dans sa section tournée vers l'orifice d'entrée (5a) du tube de transport, des moyens de guidage déplaçables (6a, 6b) destinés à régler la limite supérieure de la matière granulaire par rapport à l'orifice d'entrée (5a) du tube de transport et possède dans sa section opposée à cet orifice d'entrée, un orifice d'entrée d'organe de guidage (Z) en forme de couronne circulaire, qui est ouvert vers l'espace à gaz pur ou de lavage de l'élément filtrant.

3. Dispositif suivant la revendication 2, caractérisé en ce que l'élément canaliseur d'écoulement est un élément d'espacement (6) tubulaire cylindrique ouvert aux deux bouts entourant le tube de transport (5), dont le bord inférieur se situe en dessous de l'orifice d'entrée inférieur (5a) du tube de transport, mais qui ménage entre cet orifice d'entrée et un fond (7a) situé en dessous de celui-ci à une distance (a), au moins un orifice d'admission et que l'élément d'espacement (6), d'une part, est fixé à distance à la périphérie du tube de transport, et d'autre part, est supporté par des pieds (49) sur ledit fond (7a).

4. Dispositif suivant la revendication 2, caractérisé en ce que l'élément canalyseur d'écoulement est un élément d'espacement (6) monté coulissant sur le tube de transport (5) d'une manière telle que la distance (a) entre le bord inférieur de l'élément d'espacement (6) et le fond (7a) sous-jacent puisse être modifiée par un coulissement de l'élément d'espacement 6 par rapport au tube de transport (5) et que le tube de transport (5) est guidé de manière déplaçable au niveau d'un support (4) prévu dans sa zone supérieure, pour que la distance (b) séparant l'orifice d'entrée (5a) du tube de transport du fond (7a) puisse être modifiée par un déplacement relatif correspondant du tube de transport (5)

5. Dispositif suivant la revendication 3 ou 4, caractérisé en ce que l'élément d'espacement (6) présente plusieurs fentes périphériques longitudinales (6b) et est supporté sur le fond (7a) par l'intermédiaire des languettes situées entre les fentes, les fentes permettant une admission latérale de la matière granulaire à partir de la zone inférieure de l'élément filtrant vers l'orifice d'entrée (5a) du tube de transport et qu'une virole de masquage (6a) montée coulissante est disposée sur la périphérie de l'élément d'espacement (6), laquelle, pour masquer partiellement lesdites fentes (6b) de l'élément d'espacement (6), peut être fixée dans une position en hauteur correspondante sur l'élément d'espacement.

6. Dispositif suivant la revendication 4 ou 5, caractérisé en ce que le fond (7a) disposé en dessous de l'orifice d'entrée (5a) du tube de transport présente une crépine encastrée (56) et qu'en dessous du fond, une buse de soufflage (57) est prévue pour souffler de l'air comprimé en supplément réglable.

7. Dispositif suivant l'une quelconque des revendications 4 à 6, caractérisé en ce que le support (4) qui supporte le tube de transport (5) de manière réglable en hauteur est une calotte tronconique qui présente une hauteur telle que la matière granulaire sortant du dispositif séparateur (1, 53, 5, 429) se rassemble au-dessus de l'élément filtrant sous la forme d'un tampon de matière granulaire (P) sur une hauteur minimum (h) prédéfinie.

8. Dispositif suivant la revendication 2, caractérisé en ce que l'extrémité supérieure du tube de transport (5) tournée vers le dispositif séparateur débouche dans un tube de séparation (53) dont le diamètre intérieur est supérieur au diamètre extérieur du tube de transport et qui est raccordé, par son extrémité opposée au tube de transport, à une source de dépression (32) et que l'intervalle (54) présent entre le tube de séparation (53) et le tube de transport (5) est ouvert vers le bas.

FIG.1

0 097 310

# FIG. 2

FIG.3

FIG.4